(19) Europäisches Patentamt / European Patent Office / Office européen des brevets

(11) **EP 1 858 629 B1**

(12) **EUROPÄISCHE PATENTSCHRIFT**

(45) Veröffentlichungstag und Bekanntmachung des Hinweises auf die Patenterteilung:
**11.09.2013 Patentblatt 2013/37**

(21) Anmeldenummer: 06723072.2

(22) Anmeldetag: **21.02.2006**

(51) Int Cl.:
*B01D 67/00* (2006.01)  *B01D 69/14* (2006.01)
*B01J 19/24* (2006.01)  *B01J 35/06* (2006.01)
*C11C 3/12* (2006.01)

(86) Internationale Anmeldenummer:
**PCT/EP2006/001561**

(87) Internationale Veröffentlichungsnummer:
**WO 2006/094623 (14.09.2006 Gazette 2006/37)**

(54) **VERFAHREN ZUR HERSTELLUNG EINER POLYMERMEMBRAN SOWIE POLYMERMEMBRAN**

PROCESS FOR PRODUCING A POLYMER MEMBRANE, AND POLYMER MEMBRANE

PROCEDE POUR PRODUIRE UNE MEMBRANE POLYMERE, ET MEMBRANE POLYMERE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.03.2005 DE 102005011544**

(43) Veröffentlichungstag der Anmeldung:
**28.11.2007 Patentblatt 2007/48**

(73) Patentinhaber: **Helmholtz-Zentrum Geesthacht Zentrum für Material- und Küstenforschung GmbH
21502 Geesthacht (DE)**

(72) Erfinder:
• **FRITSCH, Detlev**
  **21465 Reinbek (DE)**
• **BENGTSON, Gisela**
  **22393 Hamburg (DE)**
• **EBERT, Katrin, Dr.**
  **21339 Lüneburg (DE)**
• **KOLL, Joachim**
  **21493 Schwarzenbek (DE)**
• **MERTEN, Petra**
  **21481 Lauenburg (DE)**

(74) Vertreter: **Grebner, Christian Georg Rudolf
Patentanwälte
Seemann & Partner
Ballindamm 3
20095 Hamburg (DE)**

(56) Entgegenhaltungen:
EP-A- 0 168 783  DE-A1- 4 229 477
DE-A1- 19 912 582  US-A- 6 071 406

• ZIEGLER S ET AL: "Palladium modified porous polymeric membranes and their performance in selective hydrogenation of propyne" JOURNAL OF MEMBRANE SCIENCE, ELSEVIER SCIENCE, AMSTERDAM, NL, Bd. 187, Nr. 1-2, 15. Juni 2001 (2001-06-15), Seiten 71-84, XP004239950 ISSN: 0376-7388
• ILLINITCH O.M., SIMONOV P.A., CUPERUS F.P.: "Nanosize palladium loaded catalytic membrane: preparation and cis-trans selectivity in hydrogenation of sunflower oil" STUD. SURF. SCI. CATAL., Bd. 118, 1998, Seiten 55-61, XP008065994 in der Anmeldung erwähnt
• FRITSCH D., BENGTSON G.: "Catalytic polymer membranes for high temperature hydrogenation of viscous liquids" ADVANCED ENGINEERING MATERIALS, Bd. 8, Nr. 5, 11. Mai 2006 (2006-05-11), Seiten 386-389, XP008066097
• VELDSINK, J.W.: "Selective hydrogenation of sunflower seed oil in a three-phase catalytic membrane reactor" JAOCS, Bd. 78, Nr. 5, 2001, Seiten 443-446, XP008066007 in der Anmeldung erwähnt

**Beschreibung**

Die Erfindung betrifft ein Verfahren zur Herstellung einer, insbesondere mikroporösen, Polymermembran. Die Erfindung betrifft ferner eine Polymermembran, die nach dem entsprechenden Verfahren hergestellt ist. Schließlich betrifft die Erfindung eine Verwendung einer entsprechenden Polymermembran, einen Membranreaktor mit einer entsprechenden Polymermembran und ein Verfahren zum Betrieb eines Membranreaktors.

Öle können als viskose Flüssigkeiten nicht effektiv mit der standardmäßigen Hydriertechnik selektiv hydriert werden. Durch die hohe Viskosität wird der Transport am Katalysator limitiert. Auch nach verringerter Viskosität durch Verdünnung mit Lösemitteln lassen sich die üblichen heterogenen Metall-Katalysatoren, die auf einer hochporösen Matrix aus Trägermaterial aufgebracht sind, nicht vorteilhaft verwenden. Die erforderliche große katalytische Oberfläche wird durch die hohe Dispersion des Metalls in den Poren des Trägers erreicht. Da durch die langsame Diffusion der langkettigen Verbindungen in den Poren eine vollständige Hydrierung aller Doppelbindungen - bei Speiseölen z.B. zu Triglyceriden der Stearinsäure - stattfindet, verblockt dieses Produkt die Poren und damit den Katalysator.

Die Möglichkeit in großer Verdünnung zu arbeiten ist wenig sinnvoll, da das Lösemittel erst wieder aufwändig abgetrennt werden müsste und bei Speiseölen eine Gesundheitsgefährdung nicht auszuschließen ist. Die technische Lösung für die Speiseölhydrierung wurde durch die Verwendung von Nickel-Trägerkatalysatoren gefunden, wobei das Metall auf einem sehr feinkörnigen Katalysatorträger aufgebracht ist, der durch Filtration wieder aufwändig, da praktisch vollständig, abgetrennt werden muss. Dabei entstehen auch beträchtliche Verluste an teilhydriertem Öl. Als Träger werden Kieselguhr, Siliziumdioxide oder Aluminiumoxide verwendet. Die Hydrierung findet typischerweise bei 170-200°C im Rührkessel statt, wobei die Temperatur der stark exothermen Reaktion nicht gut zu kontrollieren ist. Die Anbringung des Katalysators in einem Festbettreaktor ist möglich, wird technisch aber nicht für sinnvoll erachtet, da bei der stark exothermen Reaktion zur nötigen Temperaturkontrolle 3 Stufen nacheinander durchlaufen werden müssten [http: //www.soci.org/SCI/publications /2001/pdf/pb95.pdf, TRENDS IN THE DEVELOPMENT OF EDIBLE OIL HYDROGENATION CA-TALYSTS, WT Koetsier and MC Lok, Unichema International (now Synetix), Emmerich, Germany and Billingham, UK 1998, ISSN 1353-114X].

Insgesamt stellt der Stoffaustausch bei der Hydrierung von Ölen hohe Ansprüche an den Reaktor [Veldsink, et al. Heterogeneous Hydrogenation of Vegetable Oils: A Literature Review, Catal. Rev.-Sci. Eng., 39 (1997) 253-318]. Da die Hydrierung eine "schnelle" Reaktion darstellt, muss nicht nur das zu hydrierende Öl sondern auch der Wasserstoff schnell und in ausreichender Menge dem Katalysator zugeführt werden. Das Gleichgewicht Wasserstoff/Metallhydrid am Katalysator beeinflusst zudem die Isomerisierung am Katalysator. Bei guter Wasserstoffversorgung entstehen bei der selektiven Hydrierung aus den natürlich vorkommenden cis-Doppelbindungen weniger trans-Verbindungen als Nebenprodukt der Isomerisierung. Diese nicht natürlich vorkommenden trans-Verbindungen gelten als gesundheitlich bedenklich und verändern auch physikalisch das Produkt, da sie höhere Schmelzpunkte aufweisen, also zu einem höheren "solid fat content" führen.

Um die Wasserstoffversorgung am Katalysator zu verbessern, wurde ein Membranreaktor mit anorganischen Membranen als Dreiphasenreaktor getestet. Das zu hydrierende Öl wurde an der katalytisch aktivierten Oberfläche einer porösen Membran entlang gepumpt und Wasserstoff von der Membranrückseite zugeführt [Veldsink, Selective Hydrogenation of Sunflower Oil in a Three-Phase Catalytic Membrane Reactor, JAOCS 78 (2001) 443-446]. Mit diesem Reaktor konnten zwar die Transportprobleme reduziert werden, es gelang jedoch nicht, genügend große katalytische Membranflächen pro Reaktorfläche bereitzustellen. Es mussten deshalb Reaktionszeiten bis zu mehreren hundert Stunden aufgewendet werden. Durch Erhöhen der Reaktionstemperatur könnte zwar die Reaktionszeit verkürzt werden, es ist jedoch bekannt, dass der Isomerisierungsgrad mit der Temperatur steigt und nachteilig ein höherer trans-Gehalt in Kauf genommen werden müsste. Eine andere Möglichkeit unter gut zu kontrollierenden Bedingungen die selektive Hydrierung von Ölen durchzuführen wurde von Illinitch et al. gefunden [Illinitch et al. Nanosized Palladium Loaded Catalytic Membrane: Preparation and Cis-Trans Selectivity in Hydrogenation of Sunflower Oil, Stud. Surf. Sci. Catal. 118 (1998) 55-61]. Hier wird die innere Oberfläche einer porösen Polyamidmembran aus Nylon-6 mit Palladium katalytisch aktiviert und das zu hydrierende Öl zusammen mit gelöstem Wasserstoff durch das Porensystem der Membran gepumpt. Es wurde im Vergleich zu einem Batch Reaktor mit einem auf Aktivkohle geträgertem, 2 % Palladium Katalysator ein um ca. 2 % geringerer 18:1 trans-Wert von ca. 12 % bei einer Reduktion der 18:2 Konzentration von ca. 62 auf 33 % gefunden. Dies wurde als Bestätigung der These gewertet, dass im erzwungenen Durchfluss durch die katalytisch aktivierten Membranporen weniger Isomerisierung zu trans-Verbindungen gefunden wird. Die Membran aus Nylon-6 wurde mittels einer Benzenlösung der Palladiumsalze $Pd_3(OAc)_6$ oder $Pd_6Cl_{12}$ aktiviert. Mit einer wässrigen oder Aceton-Lösung aus $H_2PdCl_4$ wurden nur brüchige, mechanisch nicht stabile Membranen erhalten.

In der technischen Durchführung der Hydrierung werden optimierte Katalysatoren eingesetzt, die aufwändig und unter Produktverlust wieder vollständig abgetrennt werden müssen, da sie giftiges Nickel bzw. andere Edelmetalle enthalten. Die Reaktion ist für die gezielte Teilhydrierung zudem durch die stark exotherme Reaktion nicht gut zu steuern und der trans-Gehalt des teilhydrierten Produktes liegt zu hoch. Festbettreaktor bzw. Membranreaktor mit Wasserstoffzuführung über die Rückseite der Membran bieten keine Alternative, da sie entweder zu aufwändig sind (Festbett) oder zu geringe Katalysatormengen pro Membranreaktorvolumen aufgebracht werden können. Die Möglichkeit das innere Porensystem von Membranen katalytisch zu aktivieren und im erzwungenen Durchfluss zu verwenden, wurde zwar demonstriert, aber das ausgesuchte Material konnte nur mit toxischen Lösemitteln (Benzen) katalytisch aktiviert werden. Die Möglichkeit geträgerte Katalysatoren in eine poröse Membran einzubauen und damit die Reaktionsfähigkeit zu erhalten wurde nicht erwogen. Zudem sind die Lösemittel für Nylon-6 beschränkt. So wird in US 4,702,840 (Pall Corp.) offenbart, dass das bevorzugte Lösemittel aus Ameisensäure besteht. Als andere in Frage kommende Lösemittel werden flüssige, aliphatische Säuren wie Essig- und Propionsäure angegeben und neben Phenolen (einschließlich halogenierten Phenolen), anorganischen Säuren wie Salzsäure, Schwefelsäure oder gesättigte, alkoholische Lösungen Alkohol löslicher Salze wie $CaCl_2$, $MgCl_2$, LiCl und andere OH-Gruppen tragende Lösemittel sowie halogenierte Alkohole genannt. Keines dieser Lösemittel zeichnet sich · durch umweltfreundliches Verhalten aus, einige sind sogar ausgesprochen toxisch, also nur unter Einschränkungen und hohen Kosten zu verwenden. Überdies besteht die Gefahr, dass geträgerte Katalysatoren nicht mit den Säuren kompatibel sind bzw. der Gehalt von Salzen in der Gießlösung die Katalysatoren unzulässig in Reaktivität und Selektivität verändert.

In EP-A-0 168 783 werden eine asymmetrische mikroporöse Hohlfaser sowie ein Verfahren zu ihrer Herstellung beschrieben. Die Membran wird zu Trennungszwecken, insbesondere für die Hämodialyse, eingesetzt. Die Poren in der Membran werden durch die Bereitstellung einer Lösung mit zwei verschiedenen Polymeren, einem hydrophoben ersten Polymer und einem hydrophilen zweiten Polymer, erzeugt, wobei das zweite Polymer unter Bildung der Membran ausfällt und ausgewaschen wird.

In DE-A-42 29 477 werden ein Verfahren zur Herstellung von porösen Membranen, die dadurch hergestellten Membranen und deren Verwendung beschrieben. Die hoch saugfähigen Membranen sind als Trägermembranen für Diagnose-Teststreifen einsetzbar und zur Mikrofiltration geeignet. Zur Bildung der Poren der Membran werden wenigstens zwei unverträgliche und nicht mischbare Polymere, die zu einer Phasentrennung in einer Lösung führen, verwendet.

US- A- 6 071 406 betrifft ein Herstellungsverfahren für hydrophile Membranen. Die beschriebenen Membranen sind porös und werden als Trennungsmembranen verwendet. Die Poren werden durch die Verwendung eines hydrophoben Matrixpolymers und eines BlockCopolymers mit hydrophilen Polymereinheiten erzeugt. Dabei bilden die beiden Arten von Polymeren zwei Phasen, von denen eine Phase ausgewaschen wird, so dass eine poröse Membranstruktur zurückbleibt.

DE- A- 199 12 582 offenbart eine katalytisch aktive mikroporöse Membran mit einer Polymermatrix aus einem zur Bildung von Wasserstoffbrückenbindung befähigten Polymer. Mindestens ein anorganischer Füllstoff ist in der Polymermatrix verteilt und gewährleistet die Bildung dauerhafter Poren.

Im Artikel von S. Ziegler et al., "Palladium modified porous polymeric membranes and their performance in selective hydrogenation of propyne", Journal of Membrane Science, Bd. 187, Nr. 1-2 (2001), 71 - 84, werden Polymermembranen mit Poren zur Ultrafiltration beschrieben, die mit Titandioxid und Palladiumacetat als Katalysatoren versehen sind.

Es ist Aufgabe der vorliegenden Erfindung, ein Verfahren zur Herstellung einer Polymermembran anzugeben, mittels der eine sehr effiziente Polymermembran bereitgestellt wird und eine entsprechende Polymermembran anzugeben, mittels der ein hoher Ölfluss, insbesondere bei der Hydrierung, insbesondere von Speiseöl, möglich ist.

Gelöst wird diese Aufgabe durch ein Verfahren zur Herstellung einer, insbesondere mikroporösen, Polymermembran in folgenden Schritten:

- Bereitstellen einer Lösung, insbesondere einer Gießlösung, mit einem ersten öl- und temperaturbeständigen Polymer, einem zweiten wasserlöslichen Polymer und/oder Oligomer und mit einem Füllstoff, der poröse Partikel umfasst, wobei das die Phase bildende zweite Polymer und/oder Oligomer ein BlockCopolymer aus Propylenoxid und Ethylenoxid ist, wobei der Propylenoxidblock zwischen Ethylenoxidblöcken angeordnet ist,

- Phasenbildung des zweiten Polymers und/oder Oligomers in der Lösung, wobei wenigstens eine Phase beim Abkühlen der Lösung oder in der gekühlten Lösung gebildet wird, wobei das zweite Polymer und/oder Oligomer in der Lösung einen thermischen Übergang erfährt, wobei der thermische Übergang bei einer Temperatur stattfindet, die der Schmelztemperatur des Polymers und/oder Oligomers in der Lösung entspricht, wobei eine Phase in einem Temperaturbereich zwischen 0°C und 40°C gebildet wird,

- Trocknen bzw. Ausfällen der Lösung,

- Auswaschen des zweiten Polymers und/oder Oligomers aus der Polymermembran,

wobei der Füllstoff mit wenigstens einem Katalysator versetzt ist oder wird und/oder die hergestellte Membran durch Imprägnieren mit wenigstens einem Katalysator nachaktiviert wird.

Durch Vorsehen eines wasserlöslichen, in der Lösung Phasen bildenden zweiten Polymers und/oder Oligomers, das vorzugsweise gleichmäßig in der Lösung verteilt wird, ist unerwarteterweise festgestellt worden, dass sehr effizient Polymermembranen hergestellt werden können, die relativ große und gut verteilte Poren aufweisen. Das zweite Polymer bzw. das Oligomer kann ein oder mehrere Detergenzien sein, die insbesondere Cluster bilden, wenn beispielsweise die Phase ausgebildet wird. Vorzugsweise wird die Polymermembran bei der Herstellung gezogen.

Dadurch, dass wenigstens eine Phase beim Abkühlen der Lösung oder in der gekühlten Lösung gebildet wird, ist ein sehr verlässliches Herstellungsverfahren gegeben. Dabei erfährt das zweite Polymer und/ oder Oligomer in der Lösung einen thermischen Übergang. Durch diesen thermischen Übergang, der vorzugsweise einem Unterschreiten der Schmelztemperatur des Polymers und/ oder Oligomers in der Lösung entspricht, wird effizient die Phase bzw. die Phasen des zweiten Polymers in der Lösung ausgebildet. Der thermische Übergang kann auch einer Glastemperatur des zweiten Polymers und/ oder Oligomers in der Lösung entsprechen. Da der thermische Übergang bei einer Temperatur stattfindet, die der Schmelztemperatur des Polymers und/ oder Oligomers in der Lösung entspricht, können sich insbesondere flüssige Tropfen des zweiten Polymers und/ oder Oligomers in der Lösung bilden, die vorzugsweise gleichmäßig verteilt sind. Vorzugsweise sind die Phasen bzw. Mikrophasen stabil bei Unterschreiten einer spezifischen für das jeweilige Polymer und/ oder Oligomer in der jeweiligen Lösung vorgesehenen Temperatur. Die Phase wird in einem Temperaturbereich zwischen 0°C und 40°C gebildet.

Nach Ausbildung der Phase und vorzugsweise Trocknen bzw. Ausfällen der Polymermembran bzw. der Lösung wird das die Phase bildende zweite Polymer und/ oder Oligomer aus der Polymermembran ausgewaschen. Dieses geschieht vorzugsweise mit Wasser. Als Phase bildendes zweites Polymer ist ein Block- Copolymer aus Propylenoxid und Ethylenoxid vorgesehen, wobei der Propylenoxidblock zwischen zwei Ethylenoxidblöcken angeordnet ist. Vorzugsweise ist das Block- Copolymer ein Polyethylenglykol- *b*Polypropylenglykol- *b*- Polyethylenglykol- Copolymer. Hierzu eignet sich beispielsweise besonders bevorzugt ein Material mit Namen Pluronic der Fa. BASF und insbesondere Pluronic F38, F68, F77, F87, F88, F98 der F108 und insbesondere vorzugsweise Pluronic F127.

Eine Membran mit guter katalytischer Wirkung ist erzielbar, weil in der Lösung ein Füllstoff enthalten ist, der poröse Partikel umfasst. Der Füllstoff ist vorzugsweise gleichmäßig statistisch in der Lösung verteilt. Dieses kann beispielsweise durch Einrühren des Füllstoffes in die Lösung geschehen. Die Partikel sind beispielsweise Cluster oder Körner oder ähnliches mit einer vorzugsweisen Größe eines Durchmessers von weniger als $10\mu m$ und insbesondere vorzugsweise kleiner $1\mu m$. Vorzugsweise enthalten die porösen Partikel $Al_2O_3$, $TiO_2$, $ZrO_2$ und/oder $SiO_2$. Vorzugsweise bestehen die porösen Partikel im Wesentlichen aus diesen Bestandteilen.

Zur Herstellung der katalytischen Aktivität ist der Füllstoff mit wenigstens einem Katalysator, insbesondere Palladium und/oder Platin, versetzt oder wird entsprechend versetzt und/oder wird die hergestellte Membran durch Imprägnieren mit wenigstens einem Katalysator nachaktiviert. Hierzu wird vorzugsweise die fertige Membran wenigstens teilweise in eine Lösung getaucht, die ein Katalysatormaterial aufweist, anschließend getrocknet und der Katalysator aktiviert.

Das erste Polymer ist vorzugsweise Polyamidimid, Polysulfon, Polyethersulfon, Polyacrylnitril, Polyetherimid, Polyvinylidenfluorid, Polyethersulfon, Polyaramid, Polyetheramin, Polyimid und/oder Polyamid. Vorzugsweise wird der Lösung als Zusatz Polyvinylpyrrolidon (PVP) und/oder ein Benetzungs- und Dispersionsmaterial zugegeben. Das Benetzungs- und Dispersionsmaterial ist beispielsweise ein Material mit dem Namen Tego Dispers und insbesondere Tego Dispers 700 der Firma Tego Chemie Service GmbH, Essen, bzw. Degussa-Goldschmidt. Als Lösemittel wird vorzugsweise N-Methylpyrrolidon (NMP) und/oder Dimethylacetamid/$\gamma$-Butyrolacton (DMAc/GBL) verwendet.

Die Aufgabe wird ferner durch eine Polymermembran zur Hydrierung von Speiseöl, wie vorstehend beschrieben hergestellt, gelöst, wobei die Polymermembran einen Ölfluss eines Öls, insbesondere Speiseöls, das insbesondere raffiniert ist, von größer als 200 l/m$^2$h bar bei 60°C aufweist, wobei der Ölfluss im Dauerbetrieb der Polymermembran erzielbar ist, wobei an den Porenoberflächen wenigstens teilweise eine Katalysatorschicht aufgebracht ist. Vorzugsweise ist der Ölfluss größer 300 l/m$^2$h bar und insbesondere größer 500 l/m$^2$h bar. Die Polymermembran ist in einer bevorzugten Ausführungsform mikroporös und der Ölfluss ist insbesondere vorzugsweise bei raffiniertem Sonnenblumenöl erreichbar. Insbesondere vorzugsweise ist der Ölfluss größer als 750 l/m$^2$h bar.

Besonders effizient ist die Polymermembran bei der Hydrierung von Speiseöl, wenn an den Porenoberflächen wenigstens teilweise eine Katalysatorschicht aufgebracht ist. Der bevorzugte Katalysator ist hierbei Palladium und/oder Platin. Vorzugsweise liegt die Katalysatormenge zwischen 10 mg/m$^2$ und 20 g/m$^2$ bezogen auf die Membranfläche.

Die Polymermembran ist vorzugsweise auf einem Vlies, insbesondere Polyestervlies, aufgebracht.

Erfindungsgemäß wird eine Polymermembran, die vorstehend beschrieben wurde, zur Hydrierung von Speiseöl, insbesondere in einem Membranreaktor verwendet.

Die Aufgabe wird ferner durch einen Membranreaktor mit einer vorstehend beschriebenen Polymermembran gelöst. Ein erfindungsgemäßes Verfahren zum Betrieb eines erfindungsgemäßen Membranreaktors zur Hydrierung von Speiseöl umfasst die Schritte, dass Speiseöl in einem Druckgefäß unter Wasserstoffdruck gesetzt wird und durch eine erfindungsgemäße Polymermembran gepumpt wird.

Wenn die Membran im Vorwege mit Wasserstoff aktiviert wurde, ist eine sehr effiziente Hydrierung des Speiseöls möglich. Die Aktivierung geschieht vorzugsweise in einem Bereich zwischen 1 bar und 5 bar Wasserstoffdruck und in einem Temperaturbereich zwischen Raumtemperatur und 100°C.

Vorzugsweise wird die Membran und/oder der Bereich der Membran, insbesondere beim Betrieb des Membranreaktors erhitzt. Die Erhitzung geschieht vorzugsweise bis zu 200°C, insbesondere 170°C und ferner besonders bevorzugt bis zu einem Temperaturbereich von 100°C.

Der Wasserstoffdruck liegt vorzugsweise zwischen 2 bar und 50 bar und insbesondere vorzugsweise zwischen 4 bar und 10 bar. Der Pumpendruck des Öls liegt vorzugsweise zwischen 1 bar und 10 bar, insbesondere 1 bar und 3 bar. Der Gesamtdruck, der über der Membran anliegt, ist vorzugsweise zwischen 3 bar und 60 bar.

Es wurde eine poröse Polymermembran entwickelt, die eine hohe innere Porosität aufweist, mit geträgertem Katalysator als Füllstoff beladen sein kann, einen hohen Ölfluss von 200-2000 l/m$^2$ h bar erlaubt, eine absolute Ölverträglichkeit bei Temperaturen von 30°C bis mindestens 170°C besitzt und auf einfachem Wege auch nach der Membranherstellung katalytisch aktiviert werden kann. Die zu verwendenden Katalysatorträger können von den Eigenschaften her an die Dimension der Membran angepasst sein, d.h. das Verhältnis Membrandicke zu Trägerteilchen kann von 2: 1 bis 200:1 betragen. Die Katalysatorträger bestehen aus den bekannten Materialien wie Kieselguhr, Siliziumdioxid, Aluminiumoxid, Titandioxid, Zirkondioxid, etc. Für die Membranherstellung können vorzugsweise umweltverträgliche Hilfsmittel zur Anwendung kommen und als Fällbad der Membrangießlösung kann ausschließlich Wasser verwendet werden.

Die erfindungsgemäße Membran mit hoher katalytischer Aktivität ist für die selektive Hydrierung von Ölen bereitgestellt. Die Membran kann in einer Art Baukastensystem mit typischen Katalysatorträgermaterialien hergestellt werden. Die Katalysatorträger können sowohl vor dem Einbau in die Membran mit Katalysator beladen sein, als auch nach dem Einbau katalytisch aktiviert werden. Das Membranmaterial kann sich auch ohne Katalysatorträger katalytisch aktivieren lassen und zur selektiven Hydrierung von Ölen bei Temperaturen von vorzugsweise bis zu 150°C einsetzbar sein.

Die Erfindung wird nachstehend ohne Beschränkung des allgemeinen Erfindungsgedankens anhand von Ausführungsbeispielen unter Bezugnahme auf die Zeichnungen beschrieben. Bezüglich aller im Text nicht näher erläuterten erfindungsgemäßen Einzelheiten wird ausdrücklich auf die Zeichnungen verwiesen. Es zeigen:

Fig. 1    ein DSC-Diagramm einer Gießlösung für eine erfindungsgemäße Membran gemäß Beispiel 3 ohne Katalysatorträger bzw. ohne einen Füllstoff,

Fig. 2    einen DSC-Scan einer Gießlösung für eine Membran gemäß Beispiel 5 mit einem Füllstoff mit einem Katalysatorträger Pd Al$_2$O$_3$,

Fig. 3    eine chemische Formel des Materials Pluronic F127,

Fig. 4    eine Rasterelektronenmikroskopaufnahme einer Draufsicht einer erfindungsgemäßen Membran,

Fig. 5    eine Rasterelektronenmikroskopaufnahme eines Schnittes einer erfindungsgemäßen Membran und

Fig. 6    eine Rasterelektronenmikroskopaufnahme eines Schnittes einer erfindungsgemäßen Membran.

Polymerauswahl:

In Vorversuchen wurden Polyamidimide und Polysulfone für je 8 Tage bei 100°C in Sonnenblumenöl gelagert und zeigten keinerlei Veränderungen. Polyamidimide sind kommerziell unter dem Handelsnamen Torsion® von Solvay oder Vylomax® von Toyobo erhältlich. Polysulfone werden in breiter Auswahl angeboten, so z.B. als Ultrason® von BASF, Radel® oder Udel® von Solvay, etc. Als besonders geeignet für diese Aufgabe werden Polyamidimide, Polyamide und Polysulfone gefunden, wobei aber auch alle anderen, öl- und temperaturbeständigen Polymere eingesetzt werden können.

Katalysatorträgerauswahl:

Hier steht eine breite Auswahl geeigneter Stoffe zur Verfügung. Prinzipiell sind alle Träger der oben definierten Dimension geeignet.

Die Wechselwirkung des Trägermaterials mit dem Polymer muss im Verfahrensschritt der Membranherstellung angepasst werden. Kieselguhr eignet sich durch die offene Struktur und lässt kein Diffusionslimit erwarten. Eine generelle Anforderung an die Träger ergibt sich aus der Diffusionslimitierung kleiner Poren durch viskose Flüssigkeiten wie Öl. Es sollen nur entweder sehr große Poren vorhanden sein, die den Stofftransport nicht behindern oder eine insgesamt wenig poröse Oberfläche vorliegen. Um insgesamt allerdings genügend Fläche zu haben sind Träger mit sehr kleinen

Teilchendurchmessern von <10 $\mu$m, besser aber < 1 $\mu$m vorzuziehen. Zum Beispiel kann Aerosil ® Ox 50 von Degussa (spezifische Oberfläche (BET) 50 m$^2$/g, mittlere Teilchengröße 0.04 $\mu$m) vorteilhaft verwendet werden oder Titandioxid P25 (Degussa, 50m$^2$/g bei 0.021$\mu$m Teilchendurchmesser). Als Aluminiumoxid können Martoxide®, Martinswerk vorteilhaft verwendet werden, z.B. Typ MR70 (Martinswerk, ~8m$^2$/g, 0.7$\mu$m). Dies ist nur eine kleine Auswahl geeigneter, kommerziell verfügbarer Katalysatorträger.

In den Beispielen K1 bis K5, die nachfolgend beschrieben sind, sind Methoden beschrieben, um geeignete, katalytisch aktive geträgerte Katalysatoren herzustellen, die besonders für den Einbau in Polymermembranen geeignet sind. Die dafür angewendeten Methoden ergeben aber besonders aktive, für die vorgesehene, selektive Hydrierung geeignete Katalysatoren.

Membranherstellung:

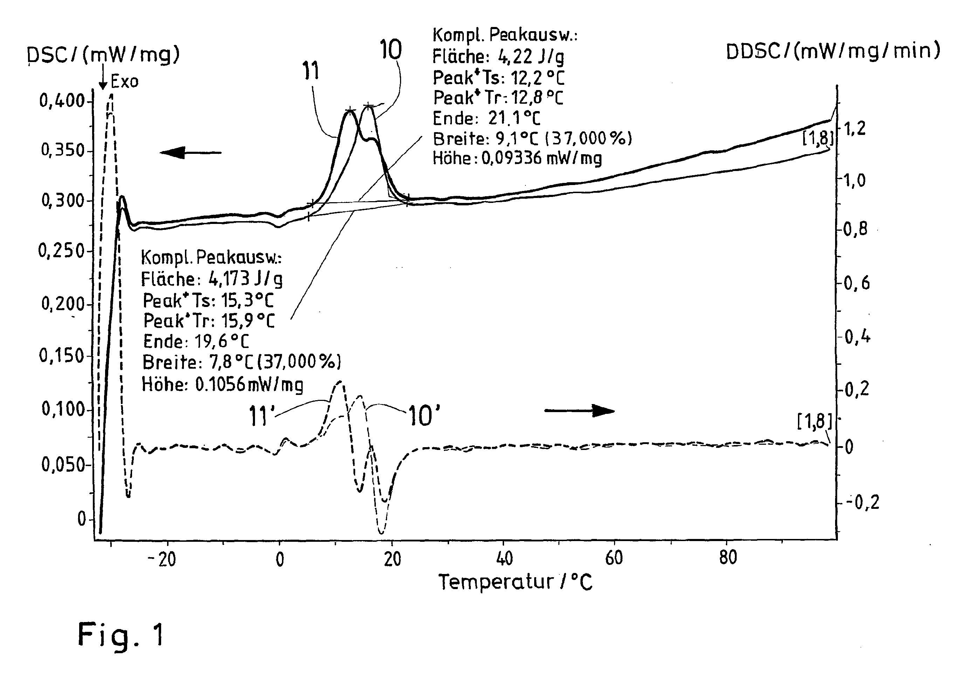

Die grundsätzlichen Prinzipien der Membranherstellung sind seit langem bekannt und umfangreich dokumentiert (z.B. "Basic Principles of Membrane Technology" Marcel Mulder: Kluwer / Academic Publishers/ Oct 1996/ ISBN: 0792342488; "Membrane Formation and Modification" (Acs Symposium Series, No 744) .I. Pinnau, B. D. Freeman (Eds) / American Chemical Society / Feb. 2000 / ISBN: 0841236046; "Microfiltration and Ultrafiltration", Leos J. Zeman, Andrew L. Zydney / Marcel Dekker/ 1996/ ISBN: 0824797353; oder speziell für Polyamidmembranen umfangreich in US 4, 340, 479) . Ein allgemeiner Zusammenhang der Porengröße mit dem Beginn der Ausfällung (Nucleation) durch Zusatz von Nichtlösemittel zur Membranziehlösung wurde allgemein gefunden (siehe US 4, 340, 479, Fig. 1) . Die Herstellung von sehr offenen, großen Poren, die auch für viskose Flüssigkeiten wie Öle einen hohen Fluss erlauben ist allerdings schwierig. Im Allgemeinen nimmt die Porengröße mit der Konzentration des Polymers in der Gießlösung und der Nähe zur Unlöslichkeit (cloud point, Nucleation) im Lösemittel bzw. Lösemittelgemisch ab. In niedriger Polymerkonzentration werden allerdings nur wenig druckstabile, mechanisch instabile Membranen erhalten. Der Zusatz von Polyvinylpyrrolidon (PVP) kann dies zwar verbessern nicht jedoch zu größeren Poren führen.

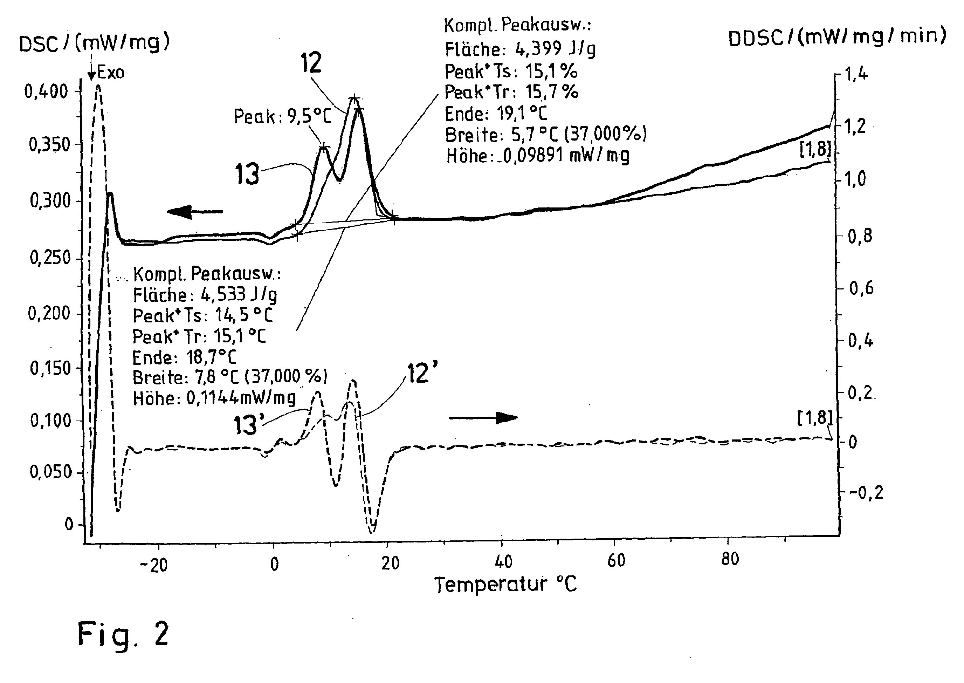

Es wurde erfindungsgemäß herausgefunden, dass durch Zusatz eines in der Lösung Phasen bildenden Polymers die Porenstruktur in Bezug auf große, gut zu durchströmende Poren erheblich verbessert werden kann. Hierzu wird der Gießlösung ein in der Gießlösung und in Wasser lösliches Polymer zugesetzt, das z.B. durch Absenken der Temperatur eine Mikrophase bildet, nicht auskristallisiert und feinst verteilt in der Lösung die Porenstruktur bei der Fällung zur Membran positiv verändert. Dieser Effekt lässt sich mit thermischen Methoden messen. In Fig. 1 und 2 sind DSC-Scans zweier typischer Gießlösungen dargestellt. Die Proben wurden auf -30°C abgekühlt, mit einer Heizrate von 10 K/min auf 100°C geheizt und wieder bis -30°C abgekühlt. Probe 1 (Fig. 1) bestand aus den Polymeren Vylomax, Pluronic und PVP mit Tego 700 Zusatz (siehe Gießlösung No. 1 in Beispiel 3 bzw. Tabelle 3), Probe 2 (Fig. 2) wie Probe 1 mit Zusatz von Pd-haltigem $Al_2O_3$ nach Membran-No. 1 in Beispiel 5. Beim Aufheizen wurde ein Doppelpeak in der Aufheizkurve 11 einer schmelzenden Komponente bei 9.5 und 16°C gefunden, der sich beim schnellen Abkühlen (Abkühlkurve) auf einen Peak reduzierte und bei ca. 16°C wieder gefunden wurde. Die im unteren Bereich der Fig. 1 und 2 dargestellten Kurven 10', 11', 12' und 13' stellen Differentialkurven dar, also ein Differential der oberen Kurven pro Zeiteinheit. Die Skala ist auf der rechten Seite dargestellt. Die Skala der oberen Kurven 10, 11, 12 und 13 sind links in den Figuren 1 und 2 dargestellt. Auf der Abzisse ist die Temperatur aufgetragen.

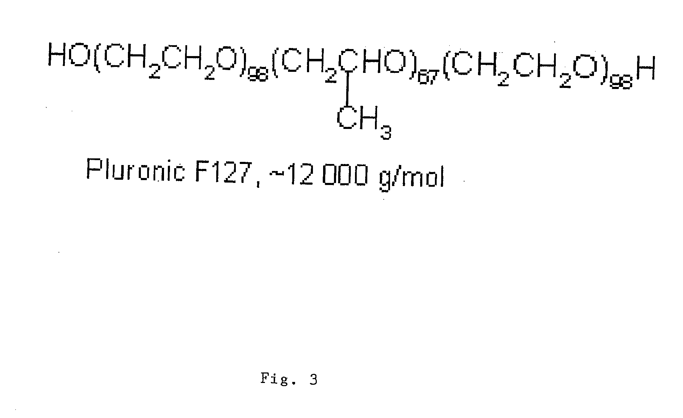

In Gießlösungen mit und ohne PVP wurde dieser Effekt gefunden, nicht jedoch ohne den Zusatz von Pluronic. Daraufhin wurden die Gießlösungen für Membranen auf 5, 9, 12, 16 und 21 °C temperiert und auf einer Membranziehmaschine zu Membranen verarbeitet (siehe Bsp. 2.) Die Gießlösung bestand aus in N- Methylpyrrolidon (NMP) gelöstem Polyamidimid, suspendiertem Aluminiumoxid und dem Zusatz von Pluronic F127 und einem Detergenz. Pluronic F127 ist ein Polyethylenglykol- *b*- polypropylenglycol- *b*- polyethylenglykol Block- Copolymer dessen Struktur in Fig. 3 gezeigt ist. Bis zu einer Temperatur der Gießlösung (Ziehtemperatur) von 16°C wurde nur ein sehr kleiner $N_2$- bzw. Wasserfluss gefunden, der ab einer Temperatur ab 12°C und kleiner dramatisch zunimmt. Entsprechend wirkt sich dieser Temperaturunterschied der Gießlösung auf den Ölfluss aus. Der Zusatz von PVP verändert diesen Temperatureffekt nicht. So wird in Beispiel 3 gezeigt, dass der Ölfluss von 0 auf 1500 l/m$^2$ h bar ansteigt, wobei sich der Bubble Point nur von 2.34 auf 4.7 $\mu$m erhöht. Es spielt keine Rolle, ob der Katalysatorträger schon durch ein Metall katalytisch aktiviert ist. So ist in Beispiel 5 mit Pd aktiviertes Aluminiumoxid zugegeben und die Spaltbreite des Ziehschlittens von 0.2 über 0.3 zu 0.4 mm eingestellt. Es wird gezeigt, dass diese Spaltbreite nur einen marginalen Einfluss auf den Ölfluss hat, der Wasserfluss jedoch bei 0.4 mm auf etwa zwei Drittel sinkt.

Durch eine Zunahme der Hydrophilie mittels eingelagertem PVP oder Pluronic kann dieser Effekt nicht erklärt werden, da der Fluss gleichermaßen für hydrophobes Öl und hydrophiles Wasser steigt. Bei hydrophiler gewordener Porenoberfläche sollte zwar der Wasserfluss steigen, der Ölfluss aber sich aber eher verringern.

Wird jedoch statt Aluminiumoxid ein Siliziumdioxid verwendet ist dieser Effekt weniger stark ausgeprägt, aber immer noch vorhanden. Durch die im Vergleich zu Aluminiumoxid schlechtere Verträglichkeit des Siliziumdioxides mit dem Polyamidimid halbiert sich der Ölfluss nur von etwa 1500 l/m$^2$ h bar zu 500- 800 l/m$^2$ h bar (siehe Beispiel 4) . Dieser Effekt ist aber nicht auf Polyamidimid als Membranpolymer beschränkt. So wird auch bei Polysulfonen durch die Absenkung der Ziehtemperatur unter den kritischen Wert von 12°C ein Ölfluss von 400 bis 1300 l/m$^2$ h bar gefunden (siehe Beispiel 1) . Aus den Beispielen 1- 5 kann man erkennen, dass das Verhältnis von N$_2$- /H$_2$O- / Ölfluss in etwa 2000/20/1 beträgt und die Bubble Points zwischen 4 und 10 bar liegen.

Die Porosität der erfindungsgemäßen Membranen wurde gravimetrisch durch Porenfüllung mit einer fluorhaltigen, hochsiedenden Flüssigkeit mit niedriger Oberflächenspannung bestimmt. Hierzu können handelsübliche Flüssigkeiten, die unter dem Handelsnamen Porewick oder Galwick vertrieben werden, verwendet werden. Für die in den Beispielen beschriebenen Membranen wurde ein Porenvolumen von 0.5 bis 2.5 l/m$^2$ gefunden. Mit zunehmender Spalthöhe bei der Membranherstellung erhöht sich das Porenvolumen von 1.4 (200$\mu$m) über 1.6 (300$\mu$m) auf 2.0 l/m$^2$ (400$\mu$m). Die Angaben in Klammern beziehen sich auf die Spalthöhe bei dem Ziehen der Membran.

Der Zusatz von polyethylenglycolhaltigen Polymeren oder Oligomeren ist per se in der Membranherstellung bekannt. So bezieht sich z.B. US 6, 565, 782, Pall Corp. auf Polysulfonmembranen, die aus Gießlösungen mit Zusatz von Polyethylenglycol und Polyvinylpyrrolidon nach bekannten Methoden gezogen werden und einen Wasserfluss von 180 bis 730 m$^3$/m$^2$ h bar erreichen. Die mit einem Permporometer gemessenen mittleren Porengrößen liegen bei 1.5 bis 5 $\mu$m. Ähnlich wird in US 6, 071, 406 (Whatman Inc.) der Gießlösung von Polysulfonmembranen PEG 300, gamma-Butyrolacton und Pluronic 10R5 zugesetzt, um eine hydrophile Membran für guten Wasserfluss zu erhalten. Es wird bei einem Bubble Point von ca. 3 bar ein Wasserfluss von ca. 13 m$^3$/m$^2$ h bar erhalten. In US 6, 495, 043 (Kalsep Limited) wird zu Polysulfon oder Polyethersulfon auch ein polyethylenglycolhaltiges Oligomer gegeben. Dieses basiert auf einem Diamin der allgemeinen Formel R1 (R2) N- CH2- CH2- N (R3) R4 und zeigt in der wässrigen Filtration einen verbesserten Wasserfluss von Anfangs 230 und im Prozess von 80 L/m$^2$ h bar. Das bei der erfindungsgemäßen Membran bevorzugt verwendete Pluronic besitzt eine andere Basisstruktur (siehe Fig. 3, das die Struktur von Pluronic F127 zeigt) . Pluronic ist ein Handelsname der Fa. BASF.

In den zitierten US Patenten ist der erzielte Ölfluss deutlich niedriger als in den hier angeführten Beispielen und die Gießlösung wird nicht unter eine Temperatur abgekühlt, die das polyethylenglycolhaltige Polymer Mikrophasen bilden lässt.

Wie dargelegt können die auf dem oben beschriebenen Wege erhältlichen Membranen schon katalytische Aktivität besitzen. Es ist aber auch möglich durch eine nachträgliche Behandlung das zugängliche Porensystem der erfindungsgemäßen Membranen zu aktivieren. Hierbei kann die Methode der Kalzinierung, wie bei den geträgerten Katalysatoren in den Beispielen K1-K5 beschrieben, nur bis zur thermischen Stabilität der Membranen also bis zu ca. 200°C angewendet werden. Jedoch besteht auch die Möglichkeit der chemischen Reduktion von in das Porensystem der Membranen eingebrachter Katalysatorvorstufen. Diese bestehen vorzugsweise aus löslichen Metallsalzen. Das Lösemittel hierfür wird so ausgewählt, dass es die Polymermembranen nicht angreift und die Porenstruktur verändert. So scheidet etwa Tetrahydrofuran als Lösemittel aus, da hiermit die Poren durch irreversible Quellung verengt werden. Das bevorzugte Lösemittel besteht hier aus Wasser. Zur besseren Dispersion des Katalysators im Porensystem können auch Zitronensäure oder andere Dispersionshilfsmittel zugesetzt werden. Alkohole können in gleicher Weise als Lösemittel dienen. Nach dem Abdampfen des Lösemittels unter erhöhter Temperatur kann entweder (1) bei thermisch unter ca. 200°C labilen Katalysatorvorstufen bei dieser Temperatur kalziniert werden, oder (2) es wird eine chemische Reduktion durchgeführt. Vorzugsweise wird hier eine Natriumborhydridlösung in Alkohol oder in Alkohol/Wassergemischen benutzt. Es können jedoch alle anderen chemische Methoden der Reduktion verwendet werden, die das Porensystem der Membran nicht nachteilig verändern. In den Beispielen 6-8 ist diese Verfahrensweise weiter ausgeführt. Auf diese Weise können Katalysatormetalle bis zu 60 g/m$^2$ Membranfläche aufgebracht werden. Doch liegt der optimale Katalysatorgehalt zwischen 0.5 und 1 g/m$^2$ Membranfläche.

Durch Zusatz von Oligomeren bzw. Polymeren, die durch eine Temperaturänderung in der Polymergießlösung Mikrostrukturen ausbilden, können sehr offene Membranen hergestellt werden. Diese zeichnen sich durch sehr hohe Flüsse von Gasen und Flüssigkeiten aus und sind besonders für sehr hohe Flüsse viskoser Flüssigkeiten geeignet. Durch Zusatz von katalysatorhaltigen Füllmaterialien und/oder durch eine nachträgliche Behandlung mit Katalysatorvorstufen werden diese Membranen katalytisch reaktiv und können für chemische Reaktionen in einem Membranreaktor eingesetzt werden. Besonders vorteilhaft ist hier die Durchführung von Reaktionen bei viskosen Flüssigkeiten, so z.B. die selektive Hydrierung von Ölen in der Flüssigphase.

Es werden mit Einsatz umweltverträglicher Chemikalien, besonders nicht oder wenig toxischer Lösemittel katalytisch reaktive Membranen im industriellen Maßstab zugänglich. Diese Membranen können in einem neuen Prozess zur selektiven Hydrierung von Ölen eingesetzt werden. Die polymeren Membranen zeigen im Gegensatz zu anorganischen Membranen z.B. aus Aluminiumoxid kein Fouling im kontinuierlichen Betrieb.

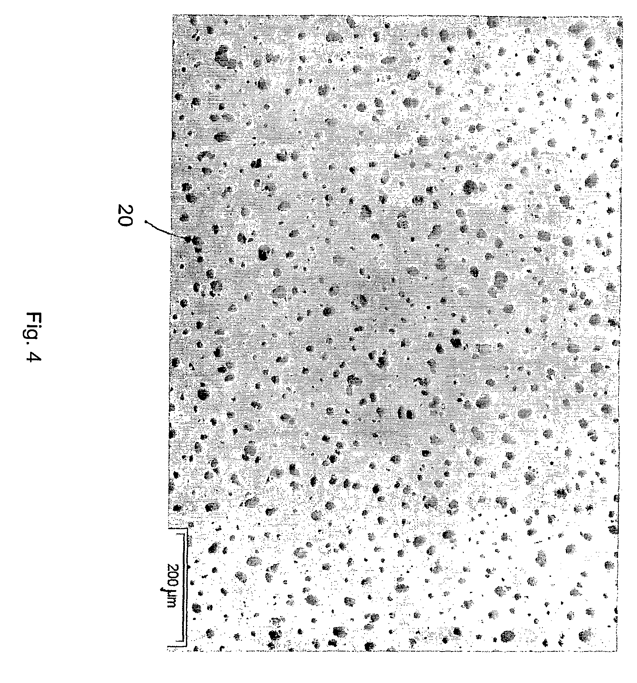

Fig. 4 zeigt eine Rasterelektronenmikroskopaufnahme einer erfindungsgemäßen Membran in einer Draufsicht. In dieser Rasterelektronenmikroskopaufnahme die ungefähr einen mm$^2$ der Membran zeigt, ist besonders gut die gleichmäßige Verteilung der Poren 20 zu erkennen. Eine Skala ist unten rechts in der Fig. 4 dargestellt.

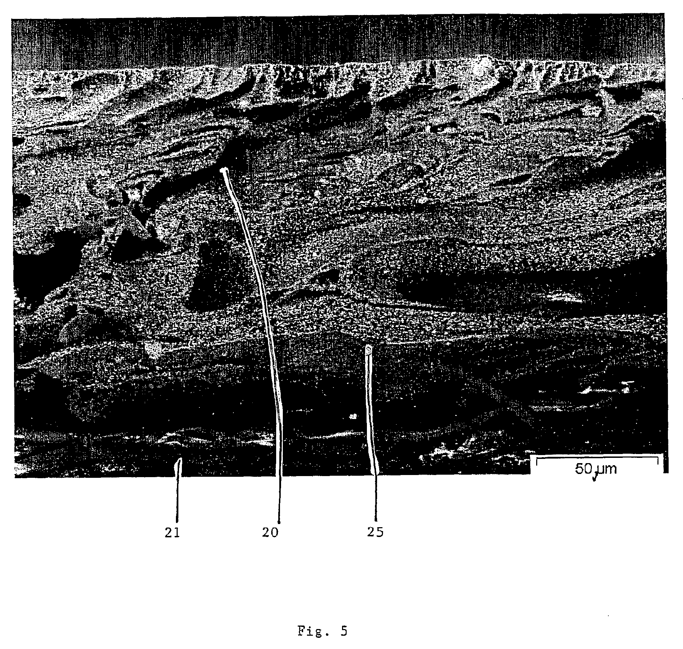

Fig. 5 zeigt die erfindungsgemäße Membran aus Fig. 4 in einer Schnittdarstellung in einer Rasterelektronenmikroskopaufnahme in einer größeren Vergrößerung. Die Membran 25 ist auf ein Trägervlies 21 aufgebracht. Auch hier sind entsprechend Poren 20 zu erkennen, wobei nur eine Pore mit Bezugsziffer versehen wurde.

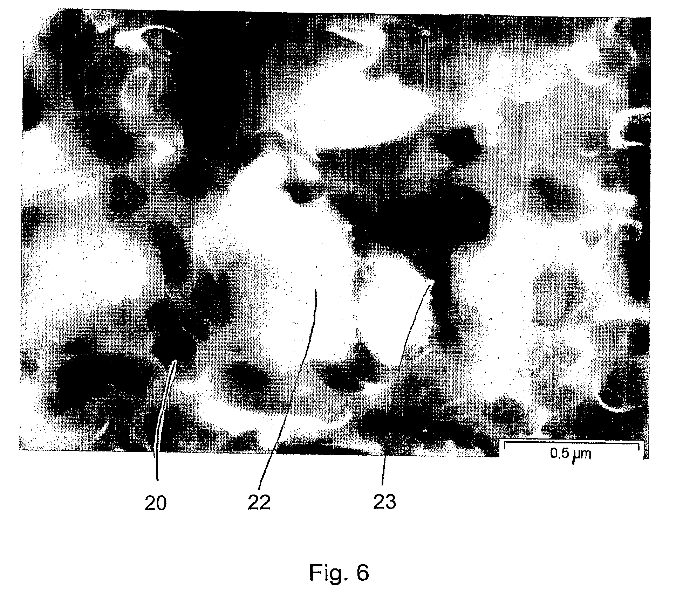

Fig. 6 zeigt einen Ausschnitt aus Fig. 5' in einer deutlich größeren Vergrößerung. Es sind auch kleine Poren 20 im Wesentlichen schwarz zu erkennen und ansonsten Füllstoffcluster 22 beispielsweise aus $Al_2O_3$. Auf den Füllstoff-clustern 22 sind als Art hellere Nasen Katalysatorcluster 23 angeordnet. Die bei der Nachaktivierung hergestellten Katalysatorbeschichtungen sind in dieser Figur nicht zu erkennen, da das Katalysatormaterial zu gut verteilt ist, um sie in dieser Rasterelektronenmikroskopaufnahme mit der entsprechenden Auflösung erkennen zu können.

Herstellungsbeispiele:

*Katalysatorherstellung*

Die Aktivität der so hergestellten Katalysatoren ist so hoch, dass diese bei Raumtemperatur (RT) in einem Wasserstoffstrom zur Hydrierung aktiviert werden können.

Beispiel K1:

2 % Edelmetall (Pd, Pt) wird auf oder in $Al_2O_3$ aufgebracht bzw. eingebracht. Die Prozentangaben sind, sofern nichts anderes ausgeführt ist und es sich um Material- oder Stoffbestandteile handelt, Gew %. 170 mg $PdCl_2$ oder 250mg $H_2PtCl_6$ wurden in 50 ml verdünnter HCl ($PdCl_2$) oder entionisiertem $H_2O$ gelöst, jeweils 1g A-luminiumdioxid (MR 70, Martinswerk) wurde in der Salzlösung unter starkem Rühren suspendiert und mindestens 2h gerührt. Die Suspension wurde am Rotavapor zur Trockene eingedampft, 2h bei 80°C getrocknet und 9h bei 450°C calziniert (Heizrate 3.6°C/min). Ausbeuten 90-95%.

Beispiel K2:

2 % Pt wird auf oder in $Al_2O_3$ aus neutralisierter Lösung aufgebracht bzw. eingebracht. 180mg $H_2PtCl_6$ wurden in 4ml $H_2O$ gelöst, 2.5g $Al_2O_3$ (Martoxid MR 70) in 4 ml $H_2O$ per Ultraschall suspendiert und beides zusammengegeben. Die Suspension hatte einen pH Wert von 1.2 (Messung mit pH- Elektrode) , mit verdünnter $NH_3$ (1 %) wurde der pH Wert auf 9 eingestellt. Es wurde 0.5h gerührt und dann zur Trockene eingedampft. Eine Hälfte des hellgelben Pulvers (K2a) wurde getrocknet und calziniert (s. Bsp. K1) , die andere Hälfte wurde chemisch mit wässrig- methanolischer Natriumborhydridlösung reduziert (K2b) , neutral gewaschen und bei 110°C getrocknet.

Beispiel K3:

2 % Pt wird auf oder in $Al_2O_3$ aus nichtwässriger Lösung auf- oder eingebracht. 2g $Al_2O_3$ wurden in 4 ml THF durch Rühren suspendiert, 100mg $H_2PtCl_6$ wurden in 4ml THF gelöst und zu der $Al_2O_3$ Suspension getropft. Die Mischung wurde 0.5h gerührt und dann eingedampft. Eine Hälfte des hellgelben Pulvers (K3a) wurde getrocknet und calziniert (s. Bsp. K1), die andere Hälfte wurde mit $NaBH_4$ Lösung reduziert (K3b), neutral gewaschen und bei 110°C getrocknet.

Beispiel K4:

2 % Pt wurde auf oder in $SiO_2$ aufgebracht oder eingebracht. Es erfolgte eine Aktivierung durch Zitronensäure.

a) 50mg $H_2PtCl_6$ wurden in 10ml $H_2O$ gelöst, 1g Siliziumdioxid (Aerosil OX 50) wurde unter starkem Rühren in die Lösung gegeben und die Suspension weiterhin 2h gerührt. Die Mischung wurde am Rotavapor eingedampft, 2h bei 80°C getrocknet und 9h bei 450°C calziniert (s. Bsp. K1). Ausbeute 0.97g hellgraues Pulver (95 %).
b) Wie a), zusätzlich wurden 350mg Zitronensäuremonohydrat zusammen mit $H_2PtCl_6$ im $H_2O$ gelöst.

Beispiel K5:

2 % Pt wurde auf oder in $Al_2O_3$ aufgebracht oder eingebracht. Die Aktivierung erfolgte durch Polyvinylpyrrolidon (PVP).
50mg $H_2PtCl_6$ und 400mg PVP K15 (Fluka) wurden in 7ml EtOH gelöst, nach Zugabe von 4ml $H_2O$ wurde die Lösung 5h unter Rückfluss erhitzt. Die Farbe der Lösung änderte sich von orange nach schwarz. Nach dem Abkühlen wurde 1g $Al_2O_3$ zugegeben und 2h gerührt. Eindampfen, Trocknen, Calzinieren wie in Bsp.K1.

*Membranherstellung*

Beispiel 1:

Jeweils 60g Polyethersulfon (Radel PXM 3000, Solvay) wurden in 425g DMAc/GBL (5: 1) gelöst. Unterschiedliche Mengen (24, 30 g) Pluronic F127 (Ethylenoxid- propylenoxid- blockcopolymer, BASF) , des Füllstoffs Aluminiumoxid (Martoxid MR 70, Martinswerk) bzw. des Detergents Tego Dispers 700 (Goldschmidt) wurden zugesetzt. Die Lösungen bzw. Suspensionen wurden temperiert und im leichten Vakuum entgast. Auf einer Membranziehmaschine wurden die Lösungen bzw. Suspensionen auf Polyestervlies (TH100, Hirose) gegossen (Spaltbreite 0.2 mm, Ziehgeschwindigkeit 2.5m pro min) und im Wasserbad ausgefällt. Restliches Lösemittel in den Membranen wurden bei erhöhter Temperatur mit Wasser entfernt und die Membranen bei 100°C getrocknet.

$N_2$- Permeabilität, Bubble points, Wasser- und Ölflüsse wurden bestimmt. Der Wert des "Bubble points" wurde mit einem so genannten Capillary Flow Porometer der Firma PMJ Europe, Belgien, bzw. der Firma Porous Materials, Inc, USA, gemessen.

Tabelle 1

| No. | Ziehtemperatur °C | Plu-ronic g | Füllstoff/ Detergent g/g | Bubble point $\mu$m | $N_2$-Fluss $m^3$ / $M^2$*h*bar | $H_2O$-Fluss 1/ m²*h*bar | Ölfluss (60°C) 1/ m²*h*bar |
|---|---|---|---|---|---|---|---|
| 1 | 20 | 24 | 0 / 0 | <0.015 | 105 | - | - |
| 2 | 20 | 30 | 0 / 0 | <0.015 | 220 | - | - |
| 3 | 7 | 24 | 30 / 2.5 | 4.4 | 3000 | 27000 | 1300 |
| 4 | 9 | 24 | 30 / 0 | 4.5 | 1200 | 800 | 400 |
| 5 | 9 | 24 | 30 / 0.25 | 4.4 | 1300 | 500 | 400 |

Beispiel 2:

800g einer Poylamidimid- Lösung (15 % Vylomax® in NMP, Toyobo) wurden mit 170g NMP verdünnt und mit 48g Pluronic F127 versetzt, nach vollständiger Lösung wurden 1.09g Tego Dispers 700 (Goldschmidt) hinzugegeben. Die Lösung rührte 2 Tage bei RT.

70g Aluminiumoxid wurden in 100 ml NMP mit Hilfe von Ultraschall am Rotavapor suspendiert (3h) und anschließend in die Polymerlösung gut eingerührt. Die Polymer- $Al_2O_3$- Suspension wurde in 5 Portionen unterteilt und diese bei unterschiedlichen Temperaturen der Gießlösung auf der Membranziehmaschine wie in Beispiel 1 verarbeitet. Die Grunddaten der Membranen wurden gemessen und in Tabelle 2 eingetragen.

Tabelle 2

| No | Ziehtemperatur °C | Bubble point $\mu$m | $N_2$-Fluss $m^3$ / m²*h*bar | $H_2O$-Fluss l/ m²*h*bar | Ölfluss (60°C) l/m²*h*bar |
|---|---|---|---|---|---|
| 1 | 21 | 2.5 | 25 | 5 | nicht messbar |
| 2 | 16 | 2.5 | 40 | 30 | nicht messbar |
| 3 | 12 | 8.8 | 2800 | 36000 | 1370 |
| 4 | 9 | 9.0 | 3000 | 33000 | 1600 |
| 5 | 5 | 3.9 | 2700 | - | 1380 |

Beispiel 3:

400g Vylomax-Lösung wurde mit 70 ml NMP verdünnt, mit 24g Pluronic, 0.5g Tego und 10g Polyvinylpyrrolidon (PVP K30 (MW 40000), Fluka) versetzt und über Nacht bei 40°C gerührt. Eine Hälfte der entgasten Lösung wurde auf 9°C gekühlt, die andere Hälfte bei RT belassen. Die Membranen wurde wie nach Beispiel 1 gezogen und Bubble Point, $N_2$-, $H_2O$- und Ölfluss gemessen (siehe Tabelle 3).

Tabelle 3

| No | Ziehtemperatur °C | Bubble point $\mu$m | $N_2$-Fluss $m^3$ / $m^2$*h*bar | $H_2O$-Fluss 1 / $m^2$*h*bar | Ölfluss (60°C) 1 / $m^2$*h*bar |
|---|---|---|---|---|---|
| 1 | 9 | 4.7 | 2300 | 18000 | 1500 |
| 2 | RT | 2.35 | 10 | - | nicht meßbar |

Beispiel 4:

200g Vylomax-Lösung wurde mit 12g Pluronic und 5g PVP K30 versetzt und gerührt. 17.5g $SiO_2$ (Aerosil OX 50, Degussa) wurden mit 0.25g Tego in 70 ml NMP mit Ultraschall suspendiert und in die vorbereitete Vylomax-Lösung gegeben. Die Suspension wurde 2 Tage bei RT gerührt und dann die Membranen bei 9°C bzw. RT gezogen (Spaltbreite 0.3 mm, sonst wie in Beispiel 1). Wiederholungen wurden mit zunehmendem $SiO_2$-Gehalt unter ansonsten identischen Bedingungen durchgeführt. Die Ergebnisse sind in Tabelle 4 beschrieben.

Tabelle 4

| No (Gehalt $SiO_2$ | Ziehtemperatur °C | Bubble point $\mu$m | $N_2$-Fluss $m^3$ / $m^2$*h*bar | $H_2O$-Fluss 1 / $m^2$*h*bar | Ölfluss 1/ $m^2$*h*bar |
|---|---|---|---|---|---|
| 1 (27 %) | 9 | 9.2 | 1800 | 43000 | 1400 |
| 2 (43 %) | 9 | 8.2 | 2000 | 23000 | 1100 |
| 3 (53 %) | 9 | 10.5 | 1900 | 60000 | 1820 |
| 4 (53 %) | 21 | 4.8 | 670 | 400 | 780 |
| 5 (60 %) | 21 | 4.1 | 710 | - | 530 |

Beispiel 5:

800g Vylomax-Lösung wurden mit 70 ml NMP verdünnt, mit 48g Pluronic und 20g PVP K30 versetzt und 2 Tage gerührt, bis eine klare Lösung entstanden war. 70g Katalysatorpulver hergestellt nach Beispiel K1 (Pd/$Al_2O_3$) wurde mit Tego in 50ml NMP suspendiert und zu der Vylomax-Lösung gegeben. Die Suspension wurde über Nacht gerührt und auf 9°C temperiert. Membranziehen wie in Bsp. 1. Die Spaltbreite wurde von 0.2 mm (A) über 0.3mm (B) bis 0.4mm (C) vergrößert.

Tabelle 5

| No | Zieh-temperatur °C | Bubble point $\mu$m | Poren-volumen l/$m^2$ | $N_2$-Fluss $m^3$ /$m^2$*h*bar | $H_2O$-Fluss 1 / $m^2$*h*bar | Ölfluss 1 / $m^2$*h*bar |
|---|---|---|---|---|---|---|
| 1 (A) | 9 | 9.2 | 1.4 | 2100 | 32000 | 1500 |
| 2 (B) | 9 | 8.6 | 1.6 | 2400 | 33000 | 1300 |
| 3 (C) | 9 | 7.8 | 2.0 | 1600 | 19000 | 1250 |

*Katalytische Aktivierung von Membranen*

Mit den hier beschriebenen Verfahren wird vorzugsweise die innere Oberfläche der Porenmembranen mit Katalysator beschichtet. Da das innere Porensystem der Membran mit dem Katalysator in feiner Dispersion beschichtet ist, ergibt sich eine um ein Vielfaches höhere Dispersion des Katalysators pro innerer Oberfläche des Porensystems im Vergleich zur eingesetzten Membranfläche. In den Bsp. 6-8 ist die Katalysatormenge auf die eingesetzte Membranfläche bezogen. Der Beschichtungslösung können auch weitere Hilfsmittel zur Dispersion wie Zitronensäure (anionisch) oder Polyethylenimin (kationisch) zugesetzt werden (s. z.B. Bsp. K4).

Beispiel 6:

Membranaktivierung durch Imprägnieren mit Pd:

Vorbereitete runde Membranstücke (Durchmesser z. B. 7.4 oder 8.9 oder 13.0 cm, passend für Membrantestzellen mit 35, 55 und 100 cm$^2$ Membranfläche) wurden mit der Membranoberseite in eine 5 %ige Lösung von PdCl$_2$ in verdünnter HCl eingebracht ohne sie unterzutauchen. Nach einigen Sekunden war das Porenvolumen der Membranstücke mit der Lösung gefüllt und gleichmäßig braun gefärbt. Überschüssige Lösung ließ man abtropfen. Die Membran wurde bei 110°C getrocknet. Der Vorgang konnte bei Bedarf mehrfach wiederholt werden. Die getrockneten Membranstücke wurden mit NaBH$_4$ Lösung (1 % in H$_2$O / Methanol (1/1)) reduziert, wobei sie sich sofort schwarz verfärbten. Nach dem Trocknen wurde die aufgebrachte Pd-Menge gravimetrisch bestimmt.
Ergebnisse für 43cm$^2$ Membranstücke:

1x Imprägnieren - 12 bis 16 mg Pd (entspricht 2.7 bis 3.7 g Pt / m$^2$ Membranfläche)
2x Imprägnieren - 24 bis 30 mg Pd (entspricht 5.6 bis 6.9 g Pt / m$^2$ Membranfläche)
3x Imprägnieren - 45 bis 60 mg Pd (entspricht 10 bis 14 g Pt / m$^2$ Membranfläche)

Beispiel 7:

Membranaktivierung durch Imprägnieren mit Pt:

Es wurde die gleiche Prozedur wie in Beispiel 6 durchgeführt, nur dass eine Lösung von H$_2$PtCl$_6$ in H$_2$O (3-5%ig) verwendet wurde.
Durch wechselndes Imprägnieren in PdCl$_2$ bzw. H$_2$PtCl$_6$ Lösungen wurden auch Gemische von Pd- und Pt-Katalysator in die Membranen eingebracht.
2x Imprägnieren in PdCl$_2$, Reduktion in NaBH$_4$ Lösung, 1x Imprägnieren in H$_2$PtCl$_6$, Reduktion ergab z.B. 25 mg Pd / 10 mg Pt jeweils pro m$^2$ Membranfläche.

Beispiel 8:

Maschinelle Membranaktivierung mit Pt:

In einer kleinen Membranbeschichtungsanlage wurden durch Tauchen die Membranporen mit einer Lösung aus dem Salz der Katalysatorvorstufe gefüllt.
Nach Tauchen mit einer 3%igen H$_2$PtCl$_6$- Lösung in Wasser oder Ethanol wurde mit Warmluft vorgetrocknet und abschließend im Trockenschrank bei 100°C getrocknet. Aus dem beschichteten Membranband wurden Stücke in Testzellengröße ausgestanzt und in NaBH$_4$ Lösung (Methanol/ Wasser 1: 1) reduziert.
Die aufgebrachte Pt- Menge wurde durch TXRF (Röntgen- Total- Reflexion) bestimmt: Ein ca. 1cm$^2$ großes aktiviertes Membranstück wurde in 2ml Königswasser (3 Teile konz. HCl / 1 Teil konz. Salpetersäure) auf 60°C erhitzt, bis alles Pt in Lösung gegangen war. Als Standard wurde Yttriumnitratlösung (1 %) zugegeben. Abhängig von der Membran und der Konzentration der Metallsalzlösung wurden 0.1 bis 5 g Pt / m$^2$ aufgetragen.
Nach dem gleichen Verfahren können alle anderen, durch chemische Reduktion erhältlichen Katalysatoren in das Membranporensystem eingebracht werden. In einer Membranziehmaschine mit eingebauter Trocknung kann die getrocknete Membran auch durch Tauchen chemisch zur katalytisch reaktiven Membran reduziert werden.

Beispiel 9:

Maschinelle Membranaktivierung mit Katalysator:

Wie in Bsp. 8 wurden die Membranporen mit einem Salz der Katalysatorvorstufe gefüllt. Dazu wurde das Salz der Katalysatorvorstufe in einem Lösemittel gelöst und mit Zitronensäure versetzt. Durch einfache Temperaturbehandlung konnte durch den Zusatz der Zitronensäure bei Temperaturen von 150 bis 200°C die vollständige Reduktion zum aktiven Katalysator durchgeführt werden. So ändert sich die Farbe der Membran von hellbraun bzw. hellbraunrot nach dem Trocknen mit Warmluft zu dunkelbraun bzw. grau nach der Temperaturbehandlung von 150 bis 200°C. Das katalytisch aktive Metall ist durch dieses Verfahren besonders stabil in den Membranporen fixiert. Die so hergestellten Membranen haben eine vergleichbare Aktivität wie die durch das nasschemische Verfahren (s. Beispiel 8) reduzierten Membranen.

Tabelle 6

| No | Masse, g | Kat. Vorstufe | Metallgehalt, % | Wasser, g | Methanol, g | 2M HCl, g | säure, g | Citronensäure, % | Kat. Vorstufe, % | KatGehalt, % | Temp. Behandlung |
|---|---|---|---|---|---|---|---|---|---|---|---|
| 1 | 0.431 | H2PtC16*6H20 | 40 | 13.94 | | | 3.143 | 17.95 | 2.46 | 0.98 | Warmluft vorgetrocknet, 16h 105°C, 2h 200°C calciniert |
| 2 | 0.431 | H2PtCl6*6H2O | 40 | 13.94 | | | 3.143 | 17.95 | 2.46 | 0.98 | Warmluft vorgetrocknet, 2h 200°C calciniert |
| 3 | 0.431 | H2PtC16*6H2O | 40 | 13.94 | | | 3.143 | 17.95 | 2.46 | 0.98 | Warmluft vorgetrocknet, 8h 105°C, 5h 125°C,16h 150°C calciniert |
| 4 | 0.400 | PdCl2 | 60 | | 9.6 | 0.614 | 2.920 | 21.58 | 2.96 | 1.77 | Warmluft vorgetrocknet, 11h 150°C calciniert |
| 5 | 0.401 | Pd(CH3COO)2 | 48 | | 9.6 | | 2.922 | 22.61 | 3.10 | 1.49 | Warmluft vorgetrocknet, 11h 150°C calciniert |

EP 1 858 629 B1

*Hydrierung von Sonnenblumenöl im Membranreaktor*

Allgemeine Vorschrift:

Die Hydrierversuche wurden unter 4 bar Wasserstoffdruck und bei 100°C durchgeführt. 500 ml handelsübliches, raffiniertes Sonnenblumenöl wurden in einem thermostatisierten Druckgefäß unter Wasserstoffdruck gesetzt, erhitzt und mittels einer Zahnradpumpe durch die porösen Membranen gepumpt. Zuvor wurde die Membran mit Wasserstoff bei 1 bar und 30°C aktiviert.

Heizbare Membrantestzellen mit 35, 55 und 100 $cm^2$ Membranfläche wurden benutzt. Das Permeat wurde im Kreislauf wieder in den Behälter zurückgeführt. Der Gesamtdruck in der Apparatur lag bei 5-6 bar (Pump- und $H_2$-Druck). Hierbei handelt es sich um die Gesamtdruckdifferenz über der Membran. Typischerweise wurde die Reaktion 8 h lang verfolgt und alle 2 h Proben (3ml) genommen.

Nach einer Verseifung mit methanolischer KOH wurden die Proben im Gaschromatographen analysiert (Säule SP 2680 (100m, Suppelco), Trägergas Helium, FID). Die GC- Analyse liefert den trans-Fettsäurengehalt, während der Iodwert (IV) des Restöles einen Summenfaktor für den Fortschritt der Hydrierung darstellt. Der Jodwert von unbehandeltem Sonnenblumenöl liegt bei 127-130.

Beispiel 10:

35cm² Membranfläche / hoher Metallgehalt oder mit vorher auf $Al_2O_3$ aufgebrachtem Katalysator (siehe Membranen No. 3 (Pd) und 8 (Pt)).

Die vorbereiteten Membranstücke wurden nach den Beispielen 6-8 durch Imprägnieren aktiviert (außer Membranen No. 3 und 8) und die aufgebrachte Metallmenge nach der Reduktion gravimetrisch oder durch TXRF bestimmt. Die Hydrierung erfolgte nach obiger allgemeiner Vorschrift.

Tabelle 7

| No | Basis- membran | Metallgehalt A=Pd/B=Pt mg | Füllstoff | Iodwert | trans-Fettsäuren- Gehalt % | Stearinsäure- Gehalt % |
|---|---|---|---|---|---|---|
| 1 | Tab3 No1 | A 62 | - | 105 | 26 | 4.2 |
| 2 | Tab3 No1 | A 56 | - | 113 | 15 | 4.4 |
| 2 | Tab2 No4 | A 45 | $Al_2O_3$ | 115 | 14 | 4.2 |
| 3 | Tab5 No3 | A 1 | $Pd/Al_2O_3$ | 114 | 17 | 5.0 |
| | | | | | | |
| 4 | Tab3 No1 | B 76 | - | 109 | 10 | 8.7 |
| 5 | Tab5 No3 | B 61 | $Al_2O_3$ | 114 | 6 | 7.7 |
| 6 | Tab5 No1 | B 35 | $Al_2O_3$ | 111 | 8 | 8.4 |
| 7 | Tab3 No1 | B 22 | - | 102 | 13 | 9.8 |
| 8 | Tab5 No1 | B 0.5 | $Pt/Al_2O_3$ | 120 | 7 | 5.9 |

Beispiel 11:

100cm² Membranfläche / geringer Metallgehalt:

Die vorbereiteten Membranstücke wurde nach Beispiel 3 mit $H_2PtCl_6$ aktiviert, die aufgebrachte Pt Menge wurde durch TXRF bestimmt. Die Hydrierung erfolgte nach der allgemeinen Vorschrift.

Tabelle 8

| No | Basismembran | Pt-Gehalt $g/m^2$ | Füllstoff | Iodwert (8h) | trans-Fettsäuren (8h) / % | Stearinsäure (8h) / % |
|---|---|---|---|---|---|---|
| 1 | Tab3 No1 | 0.35 | - | 75 | 34 | 13.2 |
| 2 | Tab4 No4 | 0.5 | $SiO_2$ | 83 | 34 | 9.8 |
| 3 | Tab2 No4 | 0.4 | $Al_2O_3$ | 85 | 24 | 11.6 |
| 4 | Tab4 No1 | 0.4 | $SiO_2$ | 86 | 27 | 11.5 |
| 5 | Tab4 No4 | 0.9 | $SiO_2$ | 87 | 21 | 11.7 |
| 6 | Tab5 No1[a] | 0.3 | $Pd/Al_2O_3$ | 91 | 27 | 9.9 |
| 7 | Tab2 No4 | 0.3 | $Al_2O_3$ | 94 | 16 | 10.1 |
| 8 | Tab3 No1 | 0.02 | - | 96 | 21 | 9.3 |
| 9 | Tab5 No1 | n. bestimmt | $Al_2O_3$ | 102 | 19 | 7.9 |
| 10 | Tab3 No1 | 0.2 | - | 105 | 12 | 8.7 |
| a) enthält Pd im Füllstoff (entsprechend 0.1 g $Pd/m^2$ Membranfläche) | | | | | | |

Die Erfindung beschreibt die Herstellung einer Membran mit hoher katalytischer Aktivität für die selektive Hydrierung von Ölen. Durch Zusatz von Oligomeren bzw. Polymeren, die durch eine Temperaturänderung in der Polymergießlösung Mikrostrukturen bzw. Fasern ausbilden, können sehr offene Membranen hergestellt werden. Diese zeichnen sich durch sehr hohe Flüsse von Gasen und Flüssigkeiten, insbesondere Ölen aus und sind besonders für sehr hohe Flüsse viskoser Flüssigkeiten geeignet. Durch den Zusatz von katalysatorhaltigen Füllmaterialien und/oder durch eine nachträgliche Behandlung mit Katalysatorvorstufen werden diese Membranen katalytisch reaktiv und können für chemische Reaktionen in einem Membranreaktor effizient eingesetzt werden. Besonders vorteilhaft ist die Durchführung von Reaktionen bei viskosen Flüssigkeiten so z.B. die selektive Hydrierung von Ölen in der Flüssigphase.

Es werden mit Einsatz umweltverträglicher Chemikalien, besonders nicht- oder wenig toxischer Lösemittel katalytisch reaktive Membranen im industriellen Maßstab zugänglich. Diese Membranen können in einem neuen Prozess zur selektiven Hydrierung von Ölen eingesetzt werden. Die polymeren erfindungsgemäßen Membranen zeigen im Gegensatz zu anorganischen Membranen z.B. aus Aluminiumoxid kein Fouling im kontinuierlichen Betrieb. Vorzugsweise sind poröse mit geträgerten Katalysator als Füllstoff beladene Polymermembranen zur Hydrierung von Ölen bereitgestellt worden. Als bevorzugte Polymere werden Polyamidimide, Polyamide und Polysulfone verwendet. Als Katalysatorträger dienen Materialien wie Kieselgur, Aluminiumoxid, Siliziumoxid usw. Zur Beeinflussung der Porenstruktur bei der Fällung zur Membran wird der Gießlösung ein in der Gießlösung und in Wasser lösliches Polymer zugesetzt. Eine nachträgliche katalytische Aktivierung vom zugänglichen Porensystem der erfindungsgemäßen Membranen kann beispielsweise durch Beschichtung der inneren Oberfläche der Poren mit Katalysator oder durch Imprägnieren mit Palladium und/oder Platin erfolgen.

Bezugszeichenliste

| | |
|---|---|
| 10, 10' | Abkühlkurve |
| 11, 11' | Aufheizkurve |
| 12, 12' | Abkühlkurve |
| 13, 13' | Aufheizkurve |
| 20 | Pore |
| 21 | Trägervlies |
| 22 | Füllstoffcluster |
| 23 | Katalysatorcluster |
| 25 | Membran |

**Patentansprüche**

1. Verfahren zur Herstellung einer, insbesondere mikroporösen, Polymermembran in folgenden Schritten:

   - Bereitstellung einer Lösung, insbesondere Gießlösung, mit einem ersten öl- und temperaturbeständigen Polymer, einem zweiten wasserlöslichen Polymer und/oder Oligomer und mit einem Füllstoff, der poröse Partikel umfasst, wobei das die Phase bildende zweite Polymer und/oder Oligomer ein Block-Copolymer aus Propylenoxid und Ethylenoxid ist, wobei der Propylenoxidblock zwischen zwei Ethylenoxidblöcken angeordnet ist,
   - Phasenbildung des zweiten Polymers und/oder Oligomers in der Lösung, wobei wenigstens eine Phase beim Abkühlen der Lösung oder in der gekühlten Lösung gebildet wird, wobei das zweite Polymer und/oder Oligomer in der Lösung einen thermischen Übergang erfährt, wobei der thermische Übergang bei einer Temperatur stattfindet, die der Schmelztemperatur des Polymers und/oder Oligomers in der Lösung entspricht, wobei eine Phase in einem Temperaturbereich zwischen 0°C und 40°C gebildet wird
   - Trocknen bzw. Ausfällen der Lösung,
   - Auswaschen des zweiten Polymers und/oder Oligomers aus der Polymermembran,

   wobei der Füllstoff mit wenigstens einem Katalysator versetzt ist oder wird und/oder die hergestellte Membran durch Imprägnieren mit wenigstens einem Katalysator nachaktiviert wird.

2. Verfahren nach Anspruch 1, **dadurch gekennzeichnet, dass** das Block-Copolymer ein Polyethylenglykol-b-Polypropylen-glykolb-Polyethylenglykol Block-Copolymer ist.

3. Verfahren nach Anspruch 1 oder 2, **dadurch gekennzeichnet, dass** die porösen Partikel $AAl_2O_3$, $TiO_2$, $ZrO_2$ und/oder $SiO_2$ enthalten.

4. Verfahren nach einem der Ansprüche 1 bis 3, **dadurch gekennzeichnet, dass** der Füllstoff mit Palladium und/oder Platin als Katalysator versetzt ist oder wird.

5. Verfahren nach einem der Ansprüche 1 bis 4, **dadurch gekennzeichnet, dass** das erste Polymer Polyamidimid, Polysulfon, Polyethersulfon, Polyacrylnitril, Polyetherimid, Polyvinylidenfluorid, Polyaramid, Polyetheramid, Polyimid und/oder Polyamid umfasst.

6. Verfahren nach einem der Ansprüche 1 bis 5, **dadurch gekennzeichnet, dass** der Lösung als Zusatz Polyvinylpyrrolidon (PVP) und/oder Benetzungs- und Dispersionsmaterial zugegeben wird.

7. Verfahren nach einem der Ansprüche 1 bis 6, **dadurch gekennzeichnet, dass** als Lösemittel N-Methylpyrrolidon (NMP) und/oder Dimethylacetamid/y-Butyrolacton (DMAc/GBL) verwendet wird.

8. Polymermembran zur Hydrierung von Speiseöl, hergestellt nach einem der Ansprüche 1 bis 7, mit einem Ölfluss eines raffinierten Sonnenblumenöls von größer als 200 l / $m^2$h bar bei 60°C, wobei der Ölfluss im Dauerbetrieb der Polymermembran erzielbar ist, wobei an den Porenoberflächen wenigstens teilweise eine Katalysatorschicht aufgebracht ist.

9. Polymermembran zur Hydrierung von Speiseöl nach Anspruch 8, **dadurch gekennzeichnet, dass** der Ölfluss größer als 750 l / $m^2$h bar ist.

10. Polymermembran nach Anspruch 8 oder 9, **dadurch gekennzeichnet, dass** die aufgebrachte Katalysatormenge zwischen 10 mg/$m^2$ und 20 g/$m^2$ liegt.

11. Polymermembran nach einem der Ansprüche 8 bis 10, **dadurch gekennzeichnet, dass** diese auf einem Vlies, insbesondere Polyestervlies, aufgebracht ist.

12. Verwendung einer Polymermembran nach einem der Ansprüche 8 bis 11 zur Hydrierung von Speiseöl, insbesondere in einem Membranreaktor.

13. Membranreaktor mit einer Polymermembran nach einem der Ansprüche 8 bis 11.

14. Verfahren zum Betrieb eines Membranreaktors nach Anspruch 13 zur Hydrierung von Speiseöl, wobei Speiseöl in einem Druckgefäß unter Wasserstoffdruck gesetzt wird und durch eine Polymermembran nach einem der Ansprüche 8 bis 11 gepumpt wird.

**15.** Verfahren nach Anspruch 14, **dadurch gekennzeichnet, dass** die Membran im Vorwege mit Wasserstoff aktiviert wurde.

**16.** Verfahren nach Anspruch 14 oder 15, **dadurch gekennzeichnet, dass** die Membran und/oder der Bereich der Membran erhitzt wird.

**17.** Verfahren nach einem der Ansprüche 14 bis 16, **dadurch gekennzeichnet, dass** der Wasserstoffdruck zwischen 2 bar und 50 bar, insbesondere zwischen 4 bar und 10 bar, liegt.

**18.** Verfahren nach einem der Ansprüche 14 bis 17, **dadurch gekennzeichnet, dass** der auf das Speiseöl wirkende Druck zwischen 1 bar und 10 bar, insbesondere zwischen 1 bar und 3 bar, liegt.

## Claims

**1.** A method of producing a, particularly microporous, polymer membrane in the following steps:

- provision of a solution, particularly a pourable solution, with a first oil- and temperature-resistant polymer, a second water-soluble polymer and/or oligomer and with a filler, which includes porous particles, wherein the second polymer and/or oligomer, which forms the phase, is a block copolymer of polypropylene oxide and ethylene oxide, wherein the propylene oxide block is arranged between two ethylene oxide blocks,
- phase formation of the second polymer and/or oligomer in the solution, wherein at least one phase is formed whilst cooling the solution or in the cooled solution, wherein the second polymer and/or oligomer in the solution undergoes a thermal transition, wherein the thermal transition occurs at a temperature which corresponds to the melting temperature of the polymer and/or oligomer in the solution, wherein a phase is formed in a temperature range between 0°c and 40°c,
- drying or precipitation of the solution,
- washing the second polymer and/or oligomer out of the polymer membrane,

wherein at least one catalyst is added to the filler and/or the membrane produced is subsequently activated by impregnation with at least one catalyst.

**2.** A method as claimed in claim 1, **characterised in that** the block copolymer is a polyethylene glycol-b-polypropylene-glycol-b-polyethylene glycol block-copolymer.

**3.** A method as claimed in claim 1 or 2, **characterised in that** the porous particles contain $Al_2O_3$, $TiO_2$, $ZrO_2$ and/or $SiO_2$.

**4.** A method as claimed in one of claims 1 to 3, **characterised in that** palladium and/or platinum is added to the filler as a catalyst.

**5.** A method as claimed in one of claims 1 to 4, **characterised in that** the first polymer includes polyamideimide, polysulphone, polyethersulphone, polyacrylnitrile, polyetherimide, polyvinylidene fluoride, polyaramide, polyetheramide, polyimide and/or polyamide.

**6.** A method as claimed in one of claims 1 to 5, **characterised in that** polyvinylpyrrolidone (PVP) and/or wetting and dispersion material is added to the solution as an additive.

**7.** A method as claimed in one of claims 1 to 6, **characterised in that** n-methylpyrrolidone (NMP) and/or dimethylacetamide/y-butyrolactone (DMAc/GBL) is used as the solvent.

**8.** A polymer membrane for hydrogenating edible oil produced in accordance with one of claims 1 to 7 with an oil flow of a refined sunflower oil of more than 2001 / $m^2$h bar at 60°c, wherein the oil flow is achievable in continuous operation of the polymer membrane, wherein applied to the surfaces of the pores at least partially there is a catalyst layer.

**9.** A polymer membrane for the hydrogenation of edible oil as claimed in claim 8, **characterised in that** the oil flow is greater than 750l / m$^2$h bar.

**10.** A polymer membrane as claimed in claim 8 or 9, **characterised in that** the applied amount of catalyst is between 10 mg/m$^2$ and 20 g/m$^2$.

**11.** A polymer membrane as claimed in one claims 8 to 10, **characterised in that** it is applied to a fleece, particularly a polyester fleece.

**12.** Use of a polymer membrane as claimed in one of claims 8 to 11 for hydrogenating edible oil, particularly in a membrane reactor.

**13.** A membrane reactor with a polymer membrane as claimed in one of claims 8 to 11.

**14.** A method of operating a membrane reactor as claimed in claim 13 for hydrogenating edible oil, wherein edible oil is placed under hydrogen pressure in a pressure vessel and pumped through a polymer membrane as claimed in one of claims 8 to 11.

**15.** A method as claimed in claim 14, **characterised in that** the membrane is activated beforehand with hydrogen.

**16.** A method as claimed in claim 14 or 15, **characterised in that** the membrane and/or the region of the membrane is heated.

**17.** A method as claimed in one of claims 14 to 16, **characterised in that** the hydrogen pressure is between 2 bar and 50 bar, particularly between 4 bar and 10 bar.

**18.** A method as claimed in one of claims 14 to 17, **characterised in that** the pressure acting on the edible oil is between 1 bar and 10 bar, particularly between 1 bar and 3 bar.

**Revendications**

**1.** Procédé de fabrication d'une membrane polymère, notamment microporeuse, par les étapes suivantes :

   - mise à disposition d'une solution, en particulier d'une solution de coulée, comportant un premier polymère résistant à l'huile et à la température, un deuxième polymère et/ou oligomère soluble dans l'eau, et une matière de charge comprenant des particules poreuses, le deuxième polymère et/ou oligomère formant la phase étant un copolymère à blocs d'oxyde de propylène et d'oxyde d'éthylène, le bloc oxyde de propylène étant disposé entre deux blocs oxyde d'éthylène,
   - formation d'une phase du deuxième polymère et/ou oligomère dans la solution, au moins une phase étant formée lors du refroidissement de la solution ou dans la solution refroidie, le deuxième polymère et/ou oligomère subissant dans la solution une transition thermique, la transition thermique ayant lieu à une température qui correspond à la température de fusion du polymère et/ou de l'oligomère dans la solution, une phase étant formée sur une plage de températures comprise entre 0 et 40°C,
   - séchage ou précipitation de la solution,
   - élimination par lavage du deuxième polymère et/ou oligomère à partir de la membrane polymère,

   dans lequel la matière de charge est déjà additionnée d'au moins un catalyseur, ou on lui ajoute au moins un catalyseur, et/ou la membrane fabriquée est activée après-coup par imprégnation avec au moins un catalyseur.

**2.** Procédé selon la revendication 1, **caractérisé en ce que** le copolymère à blocs est un copolymère à blocs polyéthylèneglycol-b-polypropylèneglycol-b-polyéthylèneglycol.

**3.** Procédé selon la revendication 1 ou 2, **caractérisé en ce que** les particules poreuses contiennent de l'Al$_2$O$_3$, du TiO$_2$, du ZrO$_2$ et/ou du SiO$_2$.

**4.** Procédé selon l'une des revendications 1 à 3, **caractérisé en ce que** la matière de charge est déjà additionnée de palladium et/ou de platine en tant que catalyseur, ou qu'on lui ajoute du palladium et/ou du platine en tant que catalyseur.

**5.** Procédé selon l'une des revendications 1 à 4, **caractérisé en ce que** le premier polymère est un polyamide-imide, une polysulfone, une polyéthersulfone, un polyacrylonitrile, un polyétherimide, un poly(fluorure de vinylidène), un polyaramide, un polyéthéramide, un polyimide et/ou un polyamide.

**6.** Procédé selon l'une des revendications 1 à 5, **caractérisé en ce qu'**on ajoute à la solution, en tant qu'additif, de la polyvinylpyrrolidone (PVP) et/ou un matériau mouillant et dispersant.

**7.** Procédé selon l'une des revendications 1 à 6, **caractérisé en ce qu'**on utilise en tant que solvant la N-méthylpyrrolidone (NMP) et/ou le diméthylacétamide/y-butyrolactone (DMAc/GBL).

**8.** Membrane polymère pour l'hydrogénation d'une huile alimentaire, fabriquée selon l'une des revendications 1 à 7, présentant un débit d'huile d'une huile de tournesol raffinée supérieur à 200 $1/m^2h.bar$ à 60°C, le débit de l'huile pouvant être atteint en marche permanente de la membrane polymère, une couche de catalyseur étant appliquée au moins partiellement sur les surfaces des pores.

**9.** Membrane polymère pour l'hydrogénation d'une huile alimentaire selon la revendication 8, **caractérisée en ce que** le débit de l'huile est supérieur à 750 $1/m^2h.bar$.

**10.** Membrane polymère selon la revendication 8 ou 9, **caractérisée en ce que** la quantité de catalyseur appliquée est comprise entre 10 $mg/m^2$ et 20 $g/m^2$.

**11.** Membrane polymère selon l'une quelconque des revendications 8 à 10, **caractérisée en ce qu'**elle est appliquée sur un non tissé, en particulier un non tissé de polyester.

**12.** Utilisation d'une membrane polymère selon l'une des revendications 8 à 11 pour l'hydrogénation d'une huile alimentaire, en particulier dans un réacteur à membrane.

**13.** Réacteur à membrane comportant une membrane polymère selon l'une des revendications 8 à 11.

**14.** Procédé pour l'exploitation d'un réacteur à membrane selon la revendication 13 pour l'hydrogénation d'une huile alimentaire, l'huile alimentaire étant placée dans un récipient sous pression, sous pression d'hydrogène, et étant pompée à travers une membrane polymère selon l'une des revendications 8 à 11.

**15.** Procédé selon la revendication 14, **caractérisé en ce que** la membrane a été au préalable activée à l'aide d'hydrogène.

**16.** Procédé selon la revendication 14 ou 15, **caractérisé en ce que** la membrane et/ou le domaine de la membrane est chauffé.

**17.** Procédé selon l'une des revendications 14 à 16, **caractérisé en ce que** la pression d'hydrogène est comprise entre 2 bar et 50 bar, en particulier entre 4 bar et 10 bar.

**18.** Procédé selon l'une des revendications 14 à 17, **caractérisé en ce que** la pression exercée sur l'huile alimentaire est comprise entre 1 bar et 10 bar, en particulier entre 1 bar et 3 bar.

Fig. 1

Fig. 2

EP 1 858 629 B1

$$HO(CH_2CH_2O)_{98}(CH_2CHO)_{67}(CH_2CH_2O)_{98}H$$
$$CH_3$$

Pluronic F127, ~12 000 g/mol

Fig. 3

20

Fig. 4

Fig. 5

20      22      23

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4702840 A
- EP 0168783 A
- DE 4229477 A
- US 6071406 A
- DE 19912582 A
- US 4340479 A
- US 6565782 B
- US 6495043 B


**In der Beschreibung aufgeführte Nicht-Patentliteratur**

- **WT KOETSIER ; MC LOK.** TRENDS IN THE DE-VELOPMENT OF EDIBLE OIL HYDROGENATION CA-TALYSTS. *Unichema International,* 1998, ISSN 1353-114X, http://www.soci.org/SCI/publications /2001/pdf/pb95.pdf
- **VELDSINK et al.** Heterogeneous Hydrogenation of Vegetable Oils: A Literature Review. *Catal. Rev.-Sci. Eng.,* 1997, vol. 39, 253-318
- **VELDSINK.** Selective Hydrogenation of Sunflower Oil in a Three-Phase Catalytic Membrane Reactor. *JAOCS,* 2001, vol. 78, 443-446
- **LLINITCH et al.** Nanosized Palladium Loaded Catalytic Membrane: Preparation and Cis-Trans Selectiv-ity. *Hydrogenation of Sunflower Oil, Stud. Surf. Sci. Catal.,* 1998, vol. 118, 55-61
- **S. ZIEGLER et al.** Palladium modified porous polymeric membranes and their performance in selective hydrogenation of propyne. *Journal of Membrane Sci-ence,* 2001, vol. 187 (1-2), 71-84
- **MARCEL MULDER.** Basic Principles of Membrane Technology. Kluwer / Academic Publishers, Oktober 1996
- Membrane Formation and Modification. American Chemical Society, Februar 2000
- **LEOS J. ZEMAN ; ANDREW L. ZYDNEY.** Microfil-tration and Ultrafiltration. Marcel Dekker, 1996